# EUROPEAN PATENT APPLICATION

(11) **EP 4 641 383 A1**
(43) Date of publication of application: **29.10.2025**
(21) Application number: 24221943.4
(22) Date of filing: 19.12.2024
(51) Int. Cl.: G06F 9/50, G06F 9/455

(54) **MICROSERVICE ORCHESTRATION AND CALLING METHOD, AND APPARATUS, DEVICE, MICROSERVICE SYSTEM AND MEDIUM**

(30) Priority: 25.04.2024 CN 202410509909
(71) Applicant: Beijing Volcano Engine Technology Co., Ltd., Beijing 100190 (CN)
(72) Inventor: PENG, Jingwen, Beijing, 100028 (CN); DING, Zhaowen, Beijing, 100028 (CN); YANG, Huahui, Beijing, 100028 (CN)
(74) Representative: Isarpatent

(57) **Abstract**

The present disclosure provides a microservice orchestration and calling method and apparatus, a device, a microservice system and a medium. The microservice orchestration method implements microservice orchestration by creating (S102) a plurality of service isolation groups and establishing (S103) a belonging relationship between each microservice to be orchestrated and the service isolation groups. In addition, the belonging relationship indicates that microservices in the same service isolation group are deployed in a same process when being deployed on a physical machine cluster, and microservices belonging to different service isolation groups are deployed in different processes when being deployed on the physical machine cluster, so that during the running process of the microservice system obtained based on the microservice orchestration method, faults can be isolated between the microservices in the different service isolation groups, and the communication cost of microservice calling can be reduced.

## Description

### FIELD

The present disclosure relates to the field of data processing and, in particular to a microservice orchestration and calling method and apparatus, a device, a microservice system and a medium.

### BACKGROUND

A microservice architecture is a software architecture, which aims to implement the decoupling of a solution by decomposing functions into discrete services, and the discrete services in the microservice architecture are usually referred to as "microservices".

The microservice architecture is a distributed system, which involves remote communication between services. Since microservices in the microservice architecture are usually deployed independently, the microservices need to communicate through a network, which results in a large communication overhead, especially in some scenarios with frequent interaction.

Therefore, how to reduce the communication cost between microservices in the microservice architecture has become a technical problem that needs to be solved urgently at present.

### SUMMARY

In order to solve the above technical problem, the present disclosure provides a microservice orchestration and calling method and apparatus, a device, a microservice system and a medium to reduce the communication cost between microservices in a microservice architecture.

In a first aspect, the present disclosure provides a microservice orchestration method, comprising:
determining a plurality of microservices to be orchestrated;
creating a plurality of service isolation groups, and determining a service runtime type corresponding to each service isolation group, where the service runtime type is used for starting a target service runtime module when a corresponding service isolation group is deployed on a physical machine cluster; and
establishing, for the plurality of microservices to be orchestrated and the plurality of service isolation groups, a belonging relationship between each microservice and a service isolation group, where the belonging relationship is used for indicating that microservices belonging to a same service isolation group are deployed in a same process when being deployed on the physical machine cluster, microservices belonging to different service isolation groups are deployed in different processes when being deployed on the physical machine cluster, and a microservice belonging to a same service isolation group matches a service runtime type corresponding to the service isolation group.

Optionally, the method further comprises:
creating at least one service group; and
establishing, for the at least one service group and the plurality of service isolation groups, a belonging relationship between each service isolation group and a service group, where the belonging relationship is used for indicating that service isolation groups belonging to a same service group are deployed on a same physical machine node when being deployed on the physical machine cluster, and service isolation groups belonging to different service groups are deployed on different physical machine nodes when being deployed on the physical machine cluster.

Optionally, the method further comprises:
receiving deployment resource information corresponding to each service group, where the deployment resource information is used for matching a target physical machine node for a corresponding service group when the corresponding service group is deployed on the physical machine cluster.

Optionally, after establishing, for the plurality of microservices to be orchestrated and the plurality of service isolation groups, the belonging relationship between each microservice and the service isolation group, the method further comprises:
based on the belonging relationship between each microservice and the service isolation group, deploying a microservice belonging to a first service isolation group in a first process on the physical machine cluster, and starting a first service runtime module for the first service isolation group in the first process based on a service runtime type corresponding to the first service isolation group; and
loading, using the first service runtime module, the microservice belonging to the first service isolation group.

Optionally, before deploying, based on the belonging relationship between each microservice and the service isolation group, the microservice belonging to the first service isolation group in the first process on the physical machine cluster, the method further comprises:
based on the belonging relationship between each service isolation group and the service group, deploying a service isolation group belonging to a first service group on a first physical machine node on the physical machine cluster, where the first service isolation group belongs to the first service group; and
correspondingly, deploying, based on the belonging relationship between each microservice and the service isolation group, the microservice belonging to the first service isolation group in the first process on the physical machine cluster comprises:
based on the belonging relationship between each microservice and the service isolation group, deploying the microservice belonging to the first service isolation group in the first process on the first physical machine node on the physical machine cluster.

Optionally, the belonging relationship is further used for indicating that microservices belonging to different service isolation groups are deployed in different containers or virtual machines when being deployed on the physical machine cluster.

In a second aspect, the present disclosure provides a microservice calling method, comprising:
initiating, by a first microservice in a first service isolation group in a microservice system, a microservice calling request, where the microservice calling request is used for calling a second microservice in the microservice system;
receiving, through a first service runtime module deployed in the first service isolation group, the microservice calling request, and determining whether the first microservice and the second microservice are deployed in a same service isolation group and run in a same process; and
when it is determined that the second microservice and the first microservice are deployed in the same service isolation group and run in the same process, forwarding, by the first service runtime module, the service calling request to the second microservice through a preset intra-process communication manner for service calling.

Optionally, the method further comprises:
when it is determined that the second microservice and the first microservice are deployed in different service isolation groups respectively, and the service isolation groups to which the second microservice and the first microservice belong, respectively are deployed on a same physical machine node, forwarding, by the first service runtime module, the service calling request to the second microservice through a preset local calling communication manner for service calling.

Optionally, the method further comprises:
when it is determined that the second microservice and the first microservice are deployed in different service isolation groups respectively, and the service isolation groups to which the second microservice and the first microservice belong, respectively are deployed on different physical machine nodes, forwarding, by the first service runtime module, the service calling request to the second microservice through a preset network communication manner for service calling.

Optionally, the method further comprises:
receiving, through the first service runtime module, an upgrade request for a third microservice in the first service isolation group, performing a hot upgrade on the third microservice, and dynamically loading an upgraded microservice corresponding to the third microservice.

In a third aspect, the present disclosure provides a microservice system, including a plurality of service isolation groups, a service runtime module and at least one microservice are deployed in each service isolation group, microservices in a same service isolation group run in a same process, and microservices in different service isolation groups run in different processes; and
the service runtime module is configured to: in response to a microservice calling request initiated by a first microservice to a second microservice, determine whether the second microservice and the first microservice belong to a same service isolation group and run in a same process; and when it is determined that the second microservice and the first microservice are deployed in the same service isolation group and run in the same process, forward the service calling request to the second microservice through a preset intra-process communication manner for service calling, where the service runtime module and the first microservice are deployed in a same service isolation group.

Optionally, a microservice in a first service isolation group of the plurality of service isolation groups is a microservice developed using a first programming language, and a service runtime module in the first service isolation group supports the running of the microservice developed using the first programming language; and/or
a microservice in a second service isolation group of the plurality of service isolation groups includes a microservice developed using a second programming language and a microservice developed using a third programming language, and a service runtime module in the second service isolation group supports the running of the microservice developed using the second programming language and the running of the microservice developed using the third programming language.

In a fourth aspect, the present disclosure provides a microservice orchestration apparatus, comprising:
a first determination module, configured to determine a plurality of microservices to be orchestrated;
a first creation module, configured to create a plurality of service isolation groups, and determine a service runtime type corresponding to each service isolation group, where the service runtime type is used for starting a target service runtime module when a corresponding service isolation group is deployed on a physical machine cluster; and
a first establishment module, configured to establish, for the plurality of microservices to be orchestrated and the plurality of service isolation groups, a belonging relationship between each microservice and a service isolation group, where the belonging relationship is used for indicating that microservices belonging to a same service isolation group are deployed in a same process when being deployed on the physical machine cluster, microservices belonging to different service isolation groups are deployed in different processes when being deployed on the physical machine cluster, and a microservice belonging to a same service isolation group matches a service runtime type corresponding to the service isolation group.

In a fifth aspect, the present disclosure provides a microservice calling apparatus, comprising:
a request initiation module, configured to initiate, by a first microservice in a first service isolation group in a microservice system, a microservice calling request, where the microservice calling request is used for calling a second microservice in the microservice system;
a second determination module, configured to receive, through a first service runtime module deployed in the first service isolation group, the microservice calling request, and determine whether the first microservice and the second microservice are deployed in a same service isolation group and run in a same process; and
a first forwarding module, configured to: when it is determined that the second microservice and the first microservice are deployed in the same service isolation group and run in the same process, forward, by the first service runtime module, the service calling request to the second microservice through a preset intra-process communication manner for service calling.

In a sixth aspect, the present disclosure provides an electronic device, comprising: a memory, a processor, and a computer program stored on the memory and executable on the processor, where the computer program, when executed by the processor, causes the processor to implement the above method.

In a seventh aspect, the present disclosure provides a computer program product, comprising a computer program/instruction that, when executed by a processor, causes the processor to implement the above method.

Compared with the prior art, the technical solutions provided by the embodiments of the present disclosure have at least the following advantages:

In the microservice orchestration method provided by the embodiments of the present disclosure, a plurality of service isolation groups are created, and the belonging relationship between each microservice to be orchestrated and the service isolation groups is established, so that the orchestration of the microservices is implemented. In addition, the belonging relationship indicates that microservices in the same service isolation group are deployed in the same process when being deployed on the physical machine cluster, and microservices belonging to different service isolation groups are deployed in different processes when being deployed on the physical machine cluster, so that during the running process of the microservice system obtained based on the microservice orchestration method, faults can be isolated between the microservices in the different service isolation groups, and the communication cost of microservice calling can be reduced.

### BRIEF DESCRIPTION OF THE DRAWINGS

The drawings herein are incorporated into and constitute a part of the specification, illustrate embodiments consistent with the disclosure, and together with the specification, serve to explain the principles of the disclosure.

In order to more clearly explain the technical solutions in the embodiments of the present disclosure or in the prior art, the following will briefly introduce the drawings that need to be used in the description of the embodiments or the prior art. Obviously, for those of ordinary skill in the art, other drawings can be obtained according to these drawings without creative labor.
Fig. 1 is a flowchart of a microservice orchestration method provided by an embodiment of the present disclosure;
Fig. 2 is a schematic structural diagram of a microservice system provided by an embodiment of the present disclosure;
Fig. 3 is a schematic structural diagram of another microservice system provided by an embodiment of the present disclosure;
Fig. 4 is a flowchart of a microservice calling method provided by an embodiment of the present disclosure;
Fig. 5 is a schematic structural diagram of a microservice orchestration apparatus provided by an embodiment of the present disclosure;
Fig. 6 is a schematic structural diagram of a microservice calling apparatus provided by an embodiment of the present disclosure;
Fig. 7 is a schematic structural diagram of a microservice orchestration device provided by an embodiment of the present disclosure; and
Fig. 8 is a schematic structural diagram of a microservice calling device provided by an embodiment of the present disclosure.

### DETAILED DESCRIPTION OF EMBODIMENTS

In order to understand the above objects, features and advantages of the present disclosure more clearly, the solutions of the present disclosure will be further described below. It should be noted that the embodiments of the present disclosure and the features in the embodiments can be combined with each other without conflict.

Many specific details are set forth in the following description to fully understand the present disclosure, but the present disclosure may also be implemented in other ways different from those described here; obviously, the embodiments in the specification are only a part of the embodiments of the present disclosure, rather than all of them.

A microservice refers to a small service module containing a relatively independent function; a microservice architecture is a software architecture pattern that splits a large application into a group of small, autonomous microservices, each of which focuses on a specific business function and collaborates with each other through a lightweight communication mechanism.

One or more microservices in a microservice system constitute a service isolation group, and microservices in the same service isolation group run in the same process. In order to reduce the impact between microservices, microservices in different service isolation groups run in different processes, and even if a microservice in a certain service isolation group is abnormal, it will not affect the operation of microservices in other service isolation groups.

Each service isolation group is deployed with a service runtime module, which is configured to load and run a microservice in the service isolation group where the service runtime module is located, and the service runtime module is a basic environment program for running the microservice.

At present, microservices in a microservice architecture are deployed independently, so the communication between microservices is usually implemented through a network, which leads to a large communication overhead of the microservice architecture, especially in some scenarios with frequent interactions.

For this reason, in the microservice orchestration method provided by the embodiments of the present disclosure, a plurality of service isolation groups are created, and the belonging relationship between each microservice to be orchestrated and the service isolation groups is established, so that the orchestration of the microservices is implemented. In addition, the belonging relationship indicates that microservices in the same service isolation group are deployed in the same process when being deployed on the physical machine cluster, and microservices belonging to different service isolation groups are deployed in different processes when being deployed on the physical machine cluster, so that during the running process of the microservice system obtained based on the microservice orchestration method, faults can be isolated between the microservices in the different service isolation groups, and the communication cost of microservice calling can be reduced.

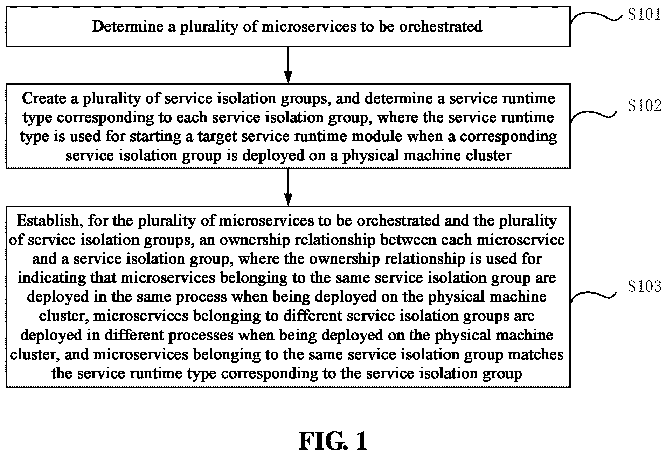

Based on this, an embodiment of the present disclosure provides a microservice orchestration method. Referring to Fig. 1, which is a flowchart of a microservice orchestration method provided by an embodiment of the present disclosure, the method comprises the following steps.

S101: Determine a plurality of microservices to be orchestrated.

In this embodiment of the present disclosure, before the microservice orchestration is performed, a microservice to be orchestrated is determined firstly, where the microservice to be orchestrated may include a microservice that has been developed.

In practical application, a plurality of microservices to be orchestrated may be determined based on a visual interface. Specifically, on the visual interface, the microservices to be orchestrated may be identified through visual controls; and displaying, on the visual interface based on the visual interface, the visual controls corresponding to the microservices to be orchestrated respectively is triggered, that is, the determination of the plurality of microservices to be orchestrated is implemented.

S102: Create a plurality of service isolation groups, and determine a service runtime type corresponding to each service isolation group, where the service runtime type is used for starting a target service runtime module when a corresponding service isolation group is deployed on a physical machine cluster.

In this embodiment of the present disclosure, the plurality of service isolation groups may be created through the visual interface. Specifically, after the creation of the plurality of service isolation groups is triggered based on the visual interface, an isolation group name and the like may also be set for each created service isolation group.

In addition, the service runtime type corresponding to each created service isolation group is determined, and the service runtime type is used for starting the target service runtime module when the corresponding service isolation group is deployed on the physical machine cluster. The target service runtime module matches the service runtime type corresponding to the service isolation group.

The service runtime type may include the service runtime module supporting the running of a microservice developed using a certain programming language or various programming languages. For example, the service runtime module supporting the running of a microservice developed based on the Golang programming language; the service runtime module supporting the running of a microservice developed based on the Java programming language; and the service runtime module supporting the running of microservices developed based on the Golang programming language and the Rust programming language.

S103: Establish, for the plurality of microservices to be orchestrated and the plurality of service isolation groups, a belonging relationship between each microservice and a service isolation group.

The belonging relationship is used for indicating that microservices belonging to the same service isolation group are deployed in the same process when being deployed on the physical machine cluster, microservices belonging to different service isolation groups are deployed in different processes when being deployed on the physical machine cluster, and a microservice belonging to the same service isolation group matches the service runtime type corresponding to the service isolation group.

In this embodiment of the present disclosure, after the plurality of service isolation groups are created and the plurality of microservices to be orchestrated are determined based on the visual interface, the belonging relationship between each microservice and the service isolation group is established by dragging, on the visual interface, the visual control corresponding to the microservice into the service isolation group.

The belonging relationship between each microservice and the service isolation group is established, so that the orchestration of the microservices is implemented, so as to deploy the microservice system composed of microservices based on the belonging relationship.

In this embodiment of the present disclosure, the belonging relationship between each microservice and the service isolation group is used for indicating that the microservices belonging to the same service isolation group are deployed in the same process on the physical machine cluster during the deployment process of the microservice system.

In addition, in order to implement the running isolation between microservices, the belonging relationship between each microservice and the service isolation group in this embodiment of the present disclosure is further used for indicating that the microservices belonging to different service isolation groups are deployed in different processes on the physical machine cluster during the deployment process of the microservice system. Since the microservices belonging to different service isolation groups are deployed in different processes on the physical machine cluster, even if a microservice in a service isolation group is abnormal, the normal operation of microservices in other service isolation groups will not be affected.

In addition, since the microservices belonging to the same service isolation group are deployed in the same process on the physical machine cluster, the microservices in the same service isolation group can call each other through the intra-process communication manner, without the need for the network communication manner, thus saving the communication resources required for microservice calling.

In the microservice orchestration method provided by the embodiments of the present disclosure, a plurality of service isolation groups are created, and the belonging relationship between each microservice to be orchestrated and the service isolation groups is established, so that the orchestration of the microservices is implemented. In addition, the belonging relationship indicates that microservices in the same service isolation group are deployed in the same process when being deployed on the physical machine cluster, and microservices belonging to different service isolation groups are deployed in different processes when being deployed on the physical machine cluster, so that during the running process of the microservice system obtained based on the microservice orchestration method, faults can be isolated between the microservices in the different service isolation groups, and the communication cost of microservice calling can be reduced.

Based on the above microservice orchestration method, at least one service group may also be created, and the belonging relationship between each service isolation group and the service group is established for the at least one service group and the plurality of created service isolation groups.

In this embodiment of the present disclosure, the belonging relationship between each service isolation group and the service group is used for indicating that the service isolation groups belonging to the same service group are deployed on the same physical machine node when being deployed on the physical machine cluster, and the service isolation groups belonging to different service groups are deployed on different physical machine nodes when being deployed on the physical machine cluster, during the deployment process of the microservice system.

In this embodiment of the present disclosure, the service group is taken as a deployment unit. During the deployment process of the microservice system, the service isolation groups belonging to the same service group are deployed on the same physical machine node on the physical machine cluster, and in each service group, the microservices are grouped in finer granularity through the service isolation groups.

In practical application, a user for microservice orchestration may trigger the creation of the belonging relationship between each service isolation group and the service group based on the visual interface, and the user may also specify the deployment number of each service group, that is, each service group may be deployed one or more copies on the physical machine cluster. The deployment of multiple copies of a certain service group on the physical machine cluster may refer to the deployment of the same service group on different physical machine nodes on the physical machine cluster respectively.

In an optional implementation, after the service group is created, not only a group name can be set for the service group, but also the deployment resource information can be determined for the service group, where the deployment resource information is used for characterizing resource information such as computing resources and storage resources required by the corresponding service group.

During the deployment process of the microservice system, a physical machine node may be determined for the corresponding service group on the physical machine cluster based on the deployment resource information corresponding to each service group, and the service group may be deployed on the physical machine node, so as to meet the running resource requirements of microservices of each service isolation group in the service group.

In practical application, after the belonging relationship between each microservice and the service isolation group and the belonging relationship between each service isolation group and the service group are established, the deployment process of the microservice system may be initiated based on the above belonging relationships.

In an optional implementation, the microservice belonging to the first service isolation group is deployed in the first process on the physical machine cluster based on the belonging relationship between each microservice and the service isolation group, the first service runtime module is started for the first service isolation group in the first process, and the microservice belonging to the first service isolation group is loaded using the first service runtime module.

Based on the above deployment manner, during the running process of the microservice system, since the microservices in the same service isolation group run in the same process, the microservices in the same service isolation group can call each other through the intra-process communication manner instead of the network communication, thus reducing the communication cost required for microservice calling.

In addition, the service isolation group belonging to the first service group is deployed on the first physical machine node on the physical machine cluster based on the belonging relationship between each service isolation group and the service group, and the first service isolation group belongs to the first service group; and the microservice belonging to the first service isolation group is deployed in the first process on the first physical machine node on the physical machine cluster based on the belonging relationship between each microservice and the service isolation group.

Based on the above deployment manner, during the running process of the microservice system, since the service isolation groups belonging to the same service group are deployed on the same physical machine node, the microservices in the service isolation groups in the same service group can call each other through the local communication manner instead of the network communication manner, thus reducing the communication cost required for microservice calling.

In an optional implementation, when being deployed on the physical machine cluster, the microservices belonging to different service isolation groups may be deployed in different containers, or deployed in different virtual machines. Since the microservices belonging to different service isolation groups are deployed in different containers, or deployed in different virtual machines, the microservices in each service isolation group can implement resource-level isolation, that is, even if a microservice in a certain service isolation group has a resource access abnormality, the normal operation of microservices in other service isolation groups will not be affected.

Based on the above content, an embodiment of the present disclosure further provides a microservice system, where the microservice system includes a plurality of service isolation groups, a service runtime module and one or more microservices are deployed in each service isolation group, and microservices in the same service isolation group run in the same process.

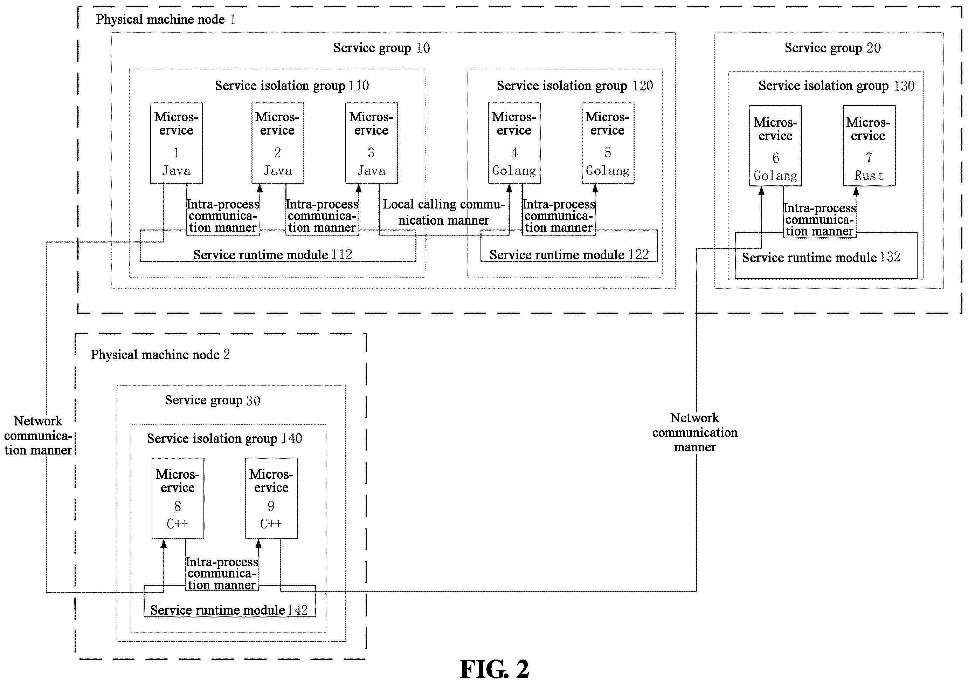

Referring to Fig. 2, which is a schematic structural diagram of a microservice system provided by an embodiment of the present disclosure, the microservice system includes a service isolation group 110, a service isolation group 120, a service isolation group 130 and a service isolation group 140. Taking the service isolation group 110 and the service isolation group 120 as examples, a service runtime module 112, a microservice 1, a microservice 2 and a microservice 3 are deployed in the service isolation group 110; and a service runtime module 122, a microservice 4 and a microservice 5 are deployed in the service isolation group 120.

The first service runtime module is configured to: in response to a service calling request initiated by a first microservice to a second microservice, determine whether the second microservice and the first microservice belong to the same service isolation group; and if it is determined that the second microservice and the first microservice belong to the same service isolation group, send the service calling request to the second microservice through a preset intra-process communication manner, where the first service runtime module and the first microservice are deployed in the same service isolation group.

The first service runtime module may be any service runtime module in the microservice system, such as the service runtime module 112 deployed in the service isolation group 110.

Since the microservices in the same service isolation group run in the same process, the microservices in the same service isolation group may call each other through the preset intra-process communication manner. Specifically, the preset intra-process communication manner may include a function call manner and the like.

In an optional implementation, the service isolation groups in the microservice system are deployed on one or more physical machine nodes respectively, and the microservices in the same service isolation group are deployed on the same physical machine node. As shown in Fig. 2, the service isolation group 110, the service isolation group 120 and the service isolation group 130 are deployed on the physical machine node 1, the service isolation group 140 is deployed on the physical machine node 2, and the microservices in the same service isolation group are deployed on the same physical machine node.

Specifically, the first service runtime module is further configured to: when it is determined that the second microservice and the first microservice belong to different service isolation groups, and the service isolation groups to which the second microservice and the first microservice belong, respectively are deployed on the same physical machine node, send the service calling request to the second microservice through the preset local calling communication manner.

In practical application, even if two microservices belonging to different service isolation groups call each other, as long as the two microservices are deployed on the same physical machine node, the network communication manner for service calling may be avoided, instead, the local calling communication manner may be used to implement the calling between the microservices, thus reducing the communication cost.

Based on the above content, the first service runtime module is further configured to: when it is determined that the second microservice and the first microservice belong to different service isolation groups, and the service isolation groups to which the second microservice and the first microservice belong, respectively are not deployed on the same physical machine node, send the service calling request to the second microservice through the preset network communication manner. As shown in Fig. 2, when the microservice 1 in the service isolation group sends a service calling request to the microservice 8 in the service isolation group 140, since the microservice 1 and the microservice 8 are deployed on different physical machine nodes respectively, the microservice calling needs to be implemented through the network communication manner.

In practical application, when it is determined that the first microservice and the second microservice are not deployed on the same physical machine node, the calling between microservices is implemented using the preset network communication manner at this time.

In an optional implementation, the service isolation groups in the microservice system are divided into a plurality of service groups. As shown in Fig. 2, the service group is taken as a deployment unit, and the service isolation groups in the same service group are deployed on the same physical machine node. As shown in Fig. 2, the service group 10 includes the service isolation group 110 and the service isolation group 120, the service group 20 includes the service isolation group 130, and the service group 30 includes the service isolation group 140. The service isolation groups in the service group 10 are deployed on the physical machine node 1, the service isolation groups in the service group 20 are also deployed on the physical machine node 1, and the service isolation groups in the service group 30 are deployed on the physical machine node 2.

In the microservice system provided by the embodiments of the present disclosure, the service group is taken as the deployment unit, and the microservices in the service isolation groups in the same service group are deployed uniformly, that is, the microservices are deployed on the same physical machine node. In addition, the user may specify the deployment number of each service group in the microservice system, and an instance (which may also be referred to as a replica) of the same service group may be deployed on the same or different physical machine nodes, so as to implement multiple deployment of the same service group.

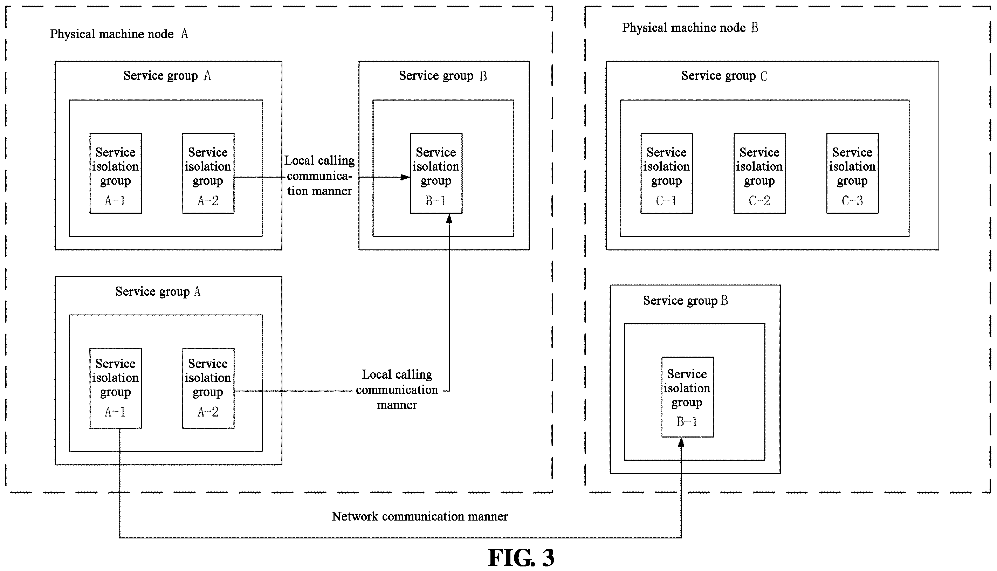

As shown in Fig. 3, which is a schematic diagram of another microservice system provided by an embodiment of the present disclosure, two identical service groups A and one service group B are deployed on the physical machine node A, and one service group C and one service group B are deployed on the physical machine node B. The microservice calling between different service isolation groups deployed on the same physical machine node is implemented through the local calling communication manner, and the calling between microservices deployed on different physical machine nodes is implemented through the network communication manner.

In addition, the microservices in different service isolation groups of the same service group may be microservices developed using different programming languages respectively. The microservices developed using the same programming language in the same service group are deployed in the same service isolation group, and the service runtime module supporting the running of the microservices developed using the programming language is deployed in the service isolation group.

In an optional implementation, a microservice in a first service isolation group of the plurality of service isolation groups is a microservice developed using a first programming language, and a service runtime module in the first service isolation group supports the running of the microservice developed using the first programming language. As shown in Fig. 2, the microservice 1, the microservice 2 and the microservice 3 in the service isolation group 110 are all microservices developed using the Java programming language, and the service runtime module 112 deployed in the service isolation group 110 supports the running of the microservices developed using the Java programming language. The microservice 4 and the microservice 5 in the service isolation group 120 are all microservices developed using the Golang programming language, and the service runtime module 112 deployed in the service isolation group 120 supports the running of the microservices developed using the Golang programming language.

In addition, the microservices in the same service isolation group may also be developed using different programming languages. The service runtime module in the service isolation group supports the running of the microservices developed using the different programming languages. As shown in Fig. 2, the microservice 6 in the service isolation group 130 is a microservice developed using the Golang programming language, the microservice 7 is a microservice developed using the Rust programming language, and the service runtime module 132 deployed in the service isolation group 130 supports the running of the microservices developed using the Golang programming language and the Rust programming language. Specifically, the implementation of the service runtime module 132 is not limited in the embodiment of the present disclosure, as long as it can support the running and loading of the microservices developed using various programming languages.

In an optional implementation, a microservice in a second service isolation group of the plurality of service isolation groups includes a microservice developed using a second programming language and a microservice developed using a third programming language, and a service runtime module in the second service isolation group supports the running of the microservice developed using the second programming language and the running of the microservice developed using the third programming language.

The first service isolation group and the second service isolation group may be any service isolation group in the microservice system.

In order to implement the isolation between microservices in different service isolation groups, the microservices in different service isolation groups can be run in different processes in the embodiments of the present disclosure, so that the microservices running in different processes do not affect each other's operation.

On this basis, in order to further improve the isolation between microservices in different service isolation groups, the embodiments of the present disclosure may also use a container or a virtual machine to isolate the microservices in different service isolation groups. Specifically, the microservices in different service isolation groups are deployed in different containers or virtual machines to implement the resource-level isolation of computing resources, storage resources and the like of the microservices in different service isolation groups. That is, when a microservice in a certain service isolation group has an operation abnormality in terms of resource access, the operation of microservices in other service isolation groups will not be affected.

In addition, the microservice system provided by the embodiments of the present disclosure supports the hot upgrade of the microservice. When a certain microservice needs to be upgraded, it is not necessary to upgrade the entire microservice system, but the hot upgrade may be performed on the microservice, thus reducing the impact caused by the microservice upgrade.

Specifically, the service runtime module deployed in the service isolation group is further configured to: in response to an upgrade request for a third microservice, perform a hot upgrade on the third microservice, and dynamically load an upgraded microservice corresponding to the third microservice, where the third microservice and the first service runtime module are deployed in the same service isolation group.

In practical application, the service runtime module may perform a hot upgrade on the microservice in the service isolation group to which the service runtime module belongs during the running process of the microservice system, and support the dynamic loading of the upgraded microservice.

In the microservice system provided by the embodiments of the present disclosure, the microservices in the same service isolation group are run in the same process, so that the microservices in the same service isolation group can call each other through the intra-process communication manner, without the need for communication through the network, thus reducing the communication cost between the microservices in the microservice system.

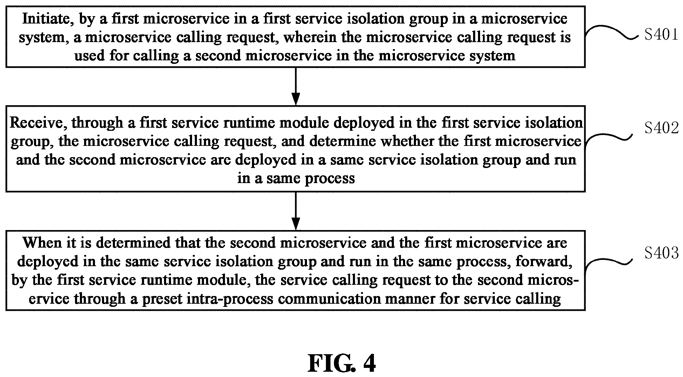

Based on the above microservice system, an embodiment of the present disclosure further provides a microservice calling method. Referring to Fig. 4, which is a flowchart of a microservice calling method provided by an embodiment of the present disclosure.

The microservice calling method is applied to the microservice system, the microservice system includes a plurality of service isolation groups, where the plurality of service isolation groups include a first service isolation group, a service runtime module and one or more microservices are deployed in each service isolation group, microservices in the same service isolation group run in the same process, and microservices in different service isolation groups run in different processes.

Specifically, the method comprises the following steps.

S401: Initiate, by a first microservice in a first service isolation group in a microservice system, a microservice calling request, where the microservice calling request is used for calling a second microservice in the microservice system.

During the running process of the microservice system, any microservice in any service isolation group in the microservice system may initiate a microservice calling request to other microservices, where an initiator and a receiver of the microservice calling request may belong to the same service isolation group in the microservice system, or may belong to different service isolation groups.

S402: Receive, through a first service runtime module deployed in the first service isolation group, the microservice calling request, and determine whether the first microservice and the second microservice are deployed in a same service isolation group and run in a same process.

The microservice system in the embodiment of the present disclosure may be a service system for implementing the function of a certain application, and each microservice in the microservice system is used for implementing a relatively independent function in the application.

The first service runtime module may be a service runtime module in any service isolation group (such as the first service isolation group) in the microservice system. When it is detected that any service runtime module receives a service calling request from a microservice in a service isolation group to which the service runtime module belongs, the service runtime module firstly determines whether a requested party of the service calling request also belongs to the service isolation group.

In practical application, the service runtime module in each service isolation group can obtain the running status of each microservice in the microservice system to which the service runtime module belongs, and when receiving the service calling request from the microservice in the service isolation group to which the service runtime module belongs, the service runtime module can send the service calling request to the requested party, so as to implement the microservice calling function.

In the embodiment of the present disclosure, the service runtime module respectively deployed in each service isolation group in the microservice system is configured to load and run the microservice in the service isolation group. Specifically, the microservice in the service isolation group may be a microservice developed using any programming language, and the corresponding service runtime module in the service isolation group is configured to support the running of the microservice developed using the programming language. For example, the service isolation group 110 and the service isolation group 120 shown in Fig. 2.

In addition, the service isolation group in the microservice system may include different microservices developed using different programming languages. For example, the same service isolation group may include a microservice developed using a second programming language and a microservice developed using a third programming language. Accordingly, the service runtime module in the service isolation group supports the running of the microservice developed using the second programming language and the running of the microservice developed using the third programming language. For example, the service isolation group 130 shown in Fig. 2.

In this embodiment of the present disclosure, the service isolation groups in the microservice system are divided into a plurality of service groups. As shown in Fig. 2, microservices developed using the same programming language in the same service group may be deployed in the same service isolation group, and the service runtime module in the service isolation group supports the loading and running of the microservices developed using the programming language. The microservices in the same service group constitute a minimum deployment unit, that is, the microservices are deployed on the same physical machine node. The microservices in the same service group not only support unified deployment, but also support unified resource expansion and other operation and maintenance operations.

S403: When it is determined that the second microservice and the first microservice are deployed in the same service isolation group and run in the same process, forward, by the first service runtime module, the service calling request to the second microservice through a preset intra-process communication manner for service calling.

In this embodiment of the present disclosure, when the first service runtime module determines that the first microservice and the second microservice belong to the same service isolation group, that is, when the microservices in the same service isolation group call each other, the first service runtime module implements the mutual calling between the microservices through the preset intra-process communication manner, that is, the service runtime module sends the service calling request from the first microservice to the second microservice, so that the second microservice processes the service calling request, thereby implementing the microservice calling function. The preset intra-process communication manner may include a function call manner and the like.

In an optional implementation, when the first service runtime module determines that the first microservice and the second microservice do not belong to the same service isolation group, that is, when the first microservice initiates the service calling request to the microservice in another service isolation group, the first service runtime module further determines whether the called second microservice and the first microservice are deployed on the same physical machine node, and if so, the microservice calling can be implemented using the local calling communication manner. Specifically, the service calling request from the first microservice is sent to the second microservice by the first service runtime module through the preset local calling communication manner.

The preset local calling communication manner may specifically include the implementation of local calling communication in such a manner that a receiving party of the service calling request listens to a socket address, and a sending party of the service calling request accesses the socket address. The embodiment of the present disclosure does not limit other manners for implementing the local calling communication.

In practical application, when it is determined that the first microservice and the second microservice are deployed on different physical machine nodes respectively, the first service runtime module implements the calling between microservices through the network communication manner.

In the microservice system provided by the embodiments of the present disclosure, the microservices in the same service isolation group are run in the same process, so that when the microservices in the same service isolation group call each other, the intra-process communication manner is used instead of the network communication manner, thus reducing the communication cost of calling between the microservices in the same service isolation group.

In addition, when the microservices in the same physical machine node call each other, the local calling communication manner is used instead of the network communication manner to implement the microservice calling, thus reducing the communication cost of calling between the microservices in the same physical machine node.

The microservice system provided by the embodiments of the present disclosure supports the hot upgrade of the microservice deployed in the microservice system, that is, during the running process of the microservice system, if a certain microservice needs to be upgraded, it is not necessary to suspend the running of the entire microservice system, but the hot upgrade may be performed on the microservice, thus reducing the impact of the microservice upgrade on the running of the entire microservice system.

In an optional implementation, the service runtime module performs a hot upgrade on the microservice and dynamically loads an upgraded microservice when receiving an upgrade request for the microservice deployed in the same service isolation group as the service runtime module.

Specifically, when receiving the upgrade request for the third microservice, the service runtime module downloads the upgraded microservice corresponding to the third microservice according to the upgrade request, and replaces the third microservice with the upgraded microservice, so as to implement the hot upgrade of the third microservice. If the service runtime module subsequently receives the service calling request for the third microservice, the upgraded microservice may be called.

In the microservice calling method provided by the embodiments of the present disclosure, the microservice system includes a plurality of service isolation groups, a service runtime module and one or more microservices are deployed in each service isolation group, and the microservices in the same service isolation group run in the same process. Specifically, the first service runtime module determines whether the second microservice and the first microservice belong to the same service isolation group in response to the service calling request initiated by the first microservice to the second microservice, and if so, the service calling request is sent to the second microservice through the preset intra-process communication manner, so that the first microservice calls the second microservice.

It can be seen that, in the embodiments of the present disclosure, the microservices in the same service isolation group in the microservice system are run in the same process, so that the microservices in the same service isolation group can call each other through the intra-process communication manner, without the need for communication through the network, thus reducing the communication cost between the microservices in the microservice system.

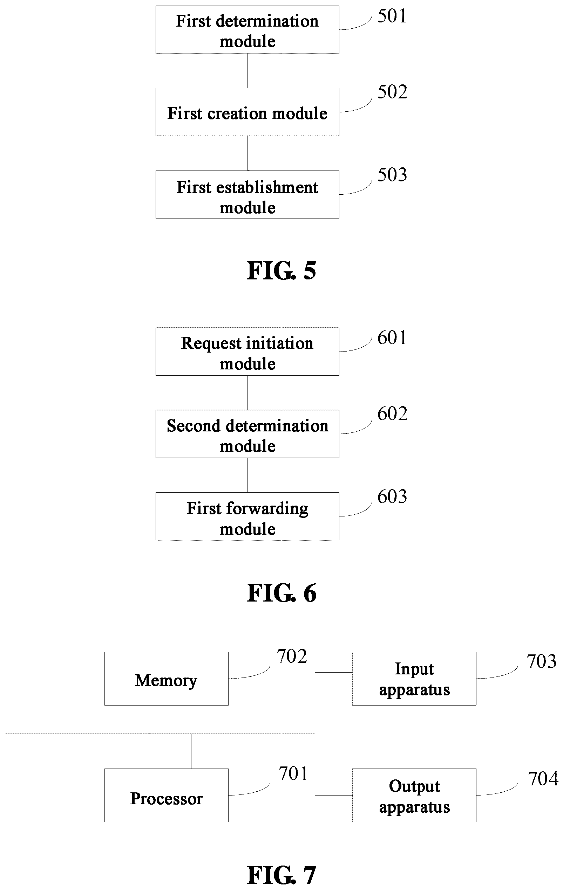

Based on the same inventive concept as the above embodiments, an embodiment of the present disclosure further provides a microservice orchestration apparatus. Referring to Fig. 5, which is a schematic structural diagram of a microservice orchestration apparatus provided by an embodiment of the present disclosure, the apparatus comprises a first determination module 501, a first creation module 502 and a first establishment module 503.

The first determination module 501 is configured to determine a plurality of microservices to be orchestrated.

The first creation module 502 is configured to create a plurality of service isolation groups.

The first establishment module 503 is configured to establish, for the plurality of microservices to be orchestrated and the plurality of service isolation groups, a belonging relationship between each microservice and a service isolation group, where the belonging relationship is used for indicating that microservices belonging to a same service isolation group are deployed in a same process when being deployed on a physical machine cluster, and microservices belonging to different service isolation groups are deployed in different processes when being deployed on the physical machine cluster.

In an optional implementation, the apparatus further comprises a second creation module and a second establishment module.

The second creation module is configured to create at least one service group.

The second establishment module is configured to establish, for the at least one service group and the plurality of service isolation groups, a belonging relationship between each service isolation group and a service group, where the belonging relationship is used for indicating that service isolation groups belonging to a same service group are deployed on a same physical machine node when being deployed on the physical machine cluster, and service isolation groups belonging to different service groups are deployed on different physical machine nodes when being deployed on the physical machine cluster.

In an optional implementation, the apparatus further comprises a receiving module.

The receiving module is configured to receive deployment resource information corresponding to each service group, where the deployment resource information is used for matching a target physical machine node for a corresponding service group when the corresponding service group is deployed on the physical machine cluster.

In an optional implementation, the apparatus further comprises:
a first deployment module, configured to deploy, based on the belonging relationship between each microservice and the service isolation group, a microservice belonging to a first service isolation group in a first process on the physical machine cluster, and start a first service runtime module for the first service isolation group in the first process; and
a loading module, configured to load, using the first service runtime module, the microservice belonging to the first service isolation group.

In an optional implementation, the apparatus further comprises:
a second deployment module, configured to deploy, based on the belonging relationship between each service isolation group and the service group, a service isolation group belonging to a first service group on a first physical machine node on the physical machine cluster, where the first service isolation group belongs to the first service group; and
correspondingly, the first deployment module is specifically configured to:
deploy, based on the belonging relationship between each microservice and the service isolation group, the microservice belonging to the first service isolation group in the first process on the first physical machine node on the physical machine cluster.

In an optional implementation, the belonging relationship is further used for indicating that microservices belonging to different service isolation groups are deployed in different containers or virtual machines when being deployed on the physical machine cluster.

Based on the same inventive concept as the above embodiments, an embodiment of the present disclosure further provides a microservice calling apparatus. Referring to Fig. 6, which is a schematic structural diagram of a microservice calling apparatus provided by an embodiment of the present disclosure, the apparatus comprises a request initiation module 601, a second determination module 602 and a first forwarding module 603.

The request initiation module 601 is configured to initiate, by a first microservice in a first service isolation group in a microservice system, a microservice calling request, where the microservice calling request is used for calling a second microservice in the microservice system.

The second determination module 602 is configured to receive, through a first service runtime module deployed in the first service isolation group, the microservice calling request, and determine whether the first microservice and the second microservice are deployed in a same service isolation group and run in a same process.

The first forwarding module 603 is configured to: when it is determined that the second microservice and the first microservice are deployed in the same service isolation group and run in the same process, forward, by the first service runtime module, the service calling request to the second microservice through a preset intra-process communication manner for service calling.

In an optional implementation, the apparatus further comprises a second forwarding module.

The second forwarding module is configured to: when it is determined that the second microservice and the first microservice are deployed in different service isolation groups respectively, and the service isolation groups to which the second microservice and the first microservice belong, respectively are deployed on a same physical machine node, forward, by the first service runtime module, the service calling request to the second microservice through a preset local calling communication manner for service calling.

In an optional implementation, the apparatus further comprises a third forwarding module.

The third forwarding module is configured to: when it is determined that the second microservice and the first microservice are deployed in different service isolation groups respectively, and the service isolation groups to which the second microservice and the first microservice belong, respectively are deployed on different physical machine nodes, forward, by the first service runtime module, the service calling request to the second microservice through a preset network communication manner for service calling.

In an optional implementation, the apparatus further comprises an upgrade module.

The upgrade module is configured to: receive, through the first service runtime module, an upgrade request for a third microservice in the first service isolation group, perform a hot upgrade on the third microservice, and dynamically load an upgraded microservice corresponding to the third microservice.

In addition to the above methods and apparatuses, an embodiment of the present disclosure further provides a computer-readable storage medium. The computer-readable storage medium stores instructions that, when executed by a terminal device, cause the terminal device to implement the method according to the embodiments of the present disclosure.

The embodiments of the present disclosure further provide a computer program product, which includes a computer program/instruction that, when executed by a processor, causes the processor to implement the method according to the embodiments of the present disclosure.

In addition, an embodiment of the present disclosure further provides a microservice orchestration device. As shown in Fig. 7, the microservice orchestration device may comprise:
a processor 701, a memory 702, an input apparatus 703 and an output apparatus 704. The number of the processor 701 in the microservice orchestration device may be one or more, and one processor is taken as an example in Fig. 7. In some embodiments of the present disclosure, the processor 701, the memory 702, the input apparatus 703 and the output apparatus 704 may be connected through a bus or other manners, where the connection through the bus is taken as an example in Fig. 7.

The memory 702 may be configured to store software programs and modules, and the processor 701 runs the software programs and modules stored in the memory 702, so as to execute various functional applications and data processing of the microservice orchestration device. The memory 702 may mainly include a program storage area and a data storage area, where the program storage area may store an operating system, an application required for at least one function, and the like. In addition, the memory 702 may include a high-speed random access memory, and may also include a non-volatile memory, such as at least one magnetic disk storage device, flash memory device, or other volatile solid-state storage device. The input apparatus 703 may be configured to receive input digital or character information, and generate signal input related to user settings and function control of the microservice orchestration device.

Specifically, in this embodiment, the processor 701 loads an executable file corresponding to a process of one or more applications into the memory 702 according to the following instructions, and the processor 701 runs the applications stored in the memory 702, so as to implement various functions of the microservice orchestration device.

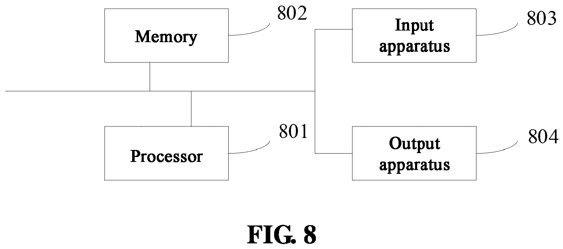

In addition, an embodiment of the present disclosure further provides a microservice calling device. As shown in Fig. 8, the microservice calling device may comprise:
a processor 801, a memory 802, an input apparatus 803 and an output apparatus 804. The number of the processor 801 in the microservice calling device may be one or more, and one processor is taken as an example in Fig. 8. In some embodiments of the present disclosure, the processor 801, the memory 802, the input apparatus 803 and the output apparatus 804 may be connected through a bus or other manners, where the connection through the bus is taken as an example in Fig. 8.

The memory 802 may be configured to store software programs and modules, and the processor 801 runs the software programs and modules stored in the memory 802, so as to execute various functional applications and data processing of the microservice calling device. The memory 802 may mainly include a program storage area and a data storage area, where the program storage area may store an operating system, an application required for at least one function, and the like. In addition, the memory 802 may include a high-speed random access memory, and may also include a non-volatile memory, such as at least one magnetic disk storage device, flash memory device, or other volatile solid-state storage device. The input apparatus 803 may be configured to receive input digital or character information, and generate signal input related to user settings and function control of the microservice calling device.

Specifically, in this embodiment, the processor 801 loads an executable file corresponding to a process of one or more applications into the memory 802 according to the following instructions, and the processor 801 runs the applications stored in the memory 802, so as to implement various functions of the microservice calling device.

It should be noted that relational terms such as "first" and "second" etc. used herein are only used to distinguish one entity or operation from another entity or operation, and do not necessarily require or imply any such actual belonging relationship or order between these entities or operations. Moreover, the terms "include", "include" or any other variants thereof are intended to cover non-exclusive inclusion, so that a process, method, product or device including a series of elements not only includes those elements, but also includes other elements not explicitly listed, or includes elements inherent to such process, method, product or device. Without more restrictions, the element defined by the sentence "include one..." does not exclude the existence of other identical elements in the process, method, product or device including the element.

The above are only specific implementations of the present disclosure, which enable those skilled in the art to understand or implement the present disclosure. Various modifications to these embodiments will be obvious to those skilled in the art, and the general principles defined herein may be implemented in other embodiments without departing from the scope of the present disclosure. Therefore, the present disclosure will not be limited to these embodiments described herein, but will be in line with the widest scope consistent with the principles and novel features disclosed herein.

## Claims

1. A microservice orchestration method, comprising:
determining (S101) a plurality of microservices to be orchestrated;
creating (S 102) a plurality of service isolation groups, and determining a service runtime type corresponding to each of the plurality of service isolation groups, wherein the service runtime type is used for starting a target service runtime module in a case that a corresponding service isolation group is deployed on a physical machine cluster; and
establishing (S103), for the plurality of microservices to be orchestrated and the plurality of service isolation groups, a belonging relationship between each of the microservices and a service isolation group, wherein the belonging relationship is used for indicating that microservices belonging to a same service isolation group are deployed in a same process in a case that being deployed on the physical machine cluster, microservices belonging to different service isolation groups are deployed in different processes in a case that being deployed on the physical machine cluster, and microservices belonging to a same service isolation group match a service runtime type corresponding to the service isolation group.

2. The method according to claim 1, the method further comprises:
creating at least one service group; and
establishing, for the at least one service group and the plurality of service isolation groups, a belonging relationship between each of the service isolation groups and a service group, wherein the belonging relationship is used for indicating that service isolation groups belonging to a same service group are deployed on a same physical machine node in a case that being deployed on the physical machine cluster, and service isolation groups belonging to different service groups are deployed on different physical machine nodes in a case that being deployed on the physical machine cluster.

3. The method according to claim 2, the method further comprises:
receiving deployment resource information corresponding to each of the service groups, wherein the deployment resource information is used for matching a target physical machine node for a corresponding service group in a case that the corresponding service group is deployed on the physical machine cluster.

4. The method according to claim 2, wherein after establishing, for the plurality of microservices to be orchestrated and the plurality of service isolation groups, the belonging relationship between each of the microservices and the service isolation group, the method further comprises:
deploying, based on the belonging relationship between each of the microservices and the service isolation group, a microservice belonging to a first service isolation group in a first process on the physical machine cluster, and starting a first service runtime module for the first service isolation group in the first process based on a service runtime type corresponding to the first service isolation group; and
loading, using the first service runtime module, the microservice belonging to the first service isolation group.

5. The method according to claim 4, wherein before deploying, based on the belonging relationship between each of the microservices and the service isolation group, the microservice belonging to the first service isolation group in the first process on the physical machine cluster, the method further comprises:
deploying, based on the belonging relationship between each of the service isolation groups and the service group, a service isolation group belonging to a first service group on a first physical machine node on the physical machine cluster, wherein the first service isolation group belongs to the first service group; and
correspondingly, wherein deploying, based on the belonging relationship between each of the microservices and the service isolation group, the microservice belonging to the first service isolation group in the first process on the physical machine cluster comprises:
deploying, based on the belonging relationship between each of the microservices and the service isolation group, the microservice belonging to the first service isolation group in the first process on the first physical machine node on the physical machine cluster.

6. The method according to claim 1, wherein the belonging relationship is further used for indicating that the microservices belonging to different service isolation groups are deployed in different containers or virtual machines in a case that being deployed on the physical machine cluster.

7. A microservice calling method, the method comprises:
Initiating (S401), by a first microservice in a first service isolation group in a microservice system, a microservice calling request, wherein the microservice calling request is used for calling a second microservice in the microservice system;
Receiving (S402), through a first service runtime module deployed in the first service isolation group, the microservice calling request, and determining whether the first microservice and the second microservice are deployed in a same service isolation group and run in a same process; and
in a case that it is determined that the second microservice and the first microservice are deployed in the same service isolation group and run in the same process, forwarding (S403), by the first service runtime module, the service calling request to the second microservice through a preset intra-process communication manner for service calling.

8. The method according to claim 7, the method further comprises:
in a case that it is determined that the second microservice and the first microservice are deployed in different service isolation groups, respectively, and the service isolation groups to which the second microservice and the first microservice belong, respectively are deployed on a same physical machine node, forwarding, by the first service runtime module, the service calling request to the second microservice through a preset local calling communication manner for service calling.

9. The method according to claim 7, the method further comprises:
in a case that it is determined that the second microservice and the first microservice are deployed in different service isolation groups, respectively, and the service isolation groups to which the second microservice and the first microservice belong, respectively are deployed on different physical machine nodes, forwarding, by the first service runtime module, the service calling request to the second microservice through a preset network communication manner for service calling.

10. The method according to claim 7, the method further comprises:
receiving, through the first service runtime module, an upgrade request for a third microservice in the first service isolation group, performing a hot upgrade on the third microservice, and dynamically loading an upgraded microservice corresponding to the third microservice.

11. A microservice system, wherein the microservice system comprises a plurality of service isolation groups (110,120,130,A-1,A-2,B-1,C-1,C-2,C-3), a service runtime module (112,122,132,142) and at least one microservice (1,2,3,4,5,6,7,8,9) are deployed in each of the service isolation groups, microservices in a same service isolation group run in a same process, and microservices in different service isolation groups run in different processes; and
the service runtime module is configured to: in response to a microservice calling request initiated by a first microservice to a second microservice, determine whether the second microservice and the first microservice belong to a same service isolation group and run in a same process; and in a case that it is determined that the second microservice and the first microservice are deployed in the same service isolation group and run in the same process, forward the service calling request to the second microservice through a preset intra-process communication manner for service calling, wherein the service runtime module and the first microservice are deployed in a same service isolation group.

12. The system according to claim 11, wherein a microservice in a first service isolation group of the plurality of service isolation groups is a microservice developed using a first programming language, and a service runtime module in the first service isolation group supports running of the microservice developed using the first programming language; and/or
a microservice in a second service isolation group of the plurality of service isolation groups comprises a microservice developed using a second programming language and a microservice developed using a third programming language, and a service runtime module in the second service isolation group supports running of the microservice developed using the second programming language and running of the microservice developed using the third programming language.

13. A microservice orchestration apparatus, comprising:
a first determination module (501), configured to determine a plurality of microservices to be orchestrated;
a first creation module (502), configured to create a plurality of service isolation groups, and determine a service runtime type corresponding to each of the plurality of service isolation groups, wherein the service runtime type is used for starting a target service runtime module in a case that a corresponding service isolation group is deployed on a physical machine cluster; and
a first establishment module (503), configured to establish, for the plurality of microservices to be orchestrated and the plurality of service isolation groups, a belonging relationship between each of the microservices and a service isolation group, wherein the belonging relationship is used for indicating that microservices belonging to a same service isolation group are deployed in a same process in a case that being deployed on the physical machine cluster, microservices belonging to different service isolation groups are deployed in different processes in a case that being deployed on the physical machine cluster, and microservices belonging to a same service isolation group match a service runtime type corresponding to the service isolation group.

14. An electronic device, comprising: a memory (702,802), a processor (701,801), and a computer program stored on the memory and executable on the processor, wherein the computer program, when executed by the processor, causes the processor to implement the method according to any of claims 1 to 10.

15. A computer program product, comprises computer programs/instructions that, when executed by a processor (701,801), cause the processor to implement the method according to any of claims 1 to 10.
